Europäisches Patentamt

European Patent Office

Office européen des brevets

(11) Numéro de publication : **0 194 910 B1**

(19)

(12) # FASCICULE DE BREVET EUROPEEN

(45) Date de publication du fascicule du brevet :
**08.05.91 Bulletin 91/19**

(51) Int. Cl.$^5$ : **C03C 13/00**

(21) Numéro de dépôt : **86400290.2**

(22) Date de dépôt : **11.02.86**

(54) **Fibres de verre résistant aux milieux basiques et application de celles-ci au renforcement du ciment.**

(30) Priorité : **12.02.85 FR 8501936**

(43) Date de publication de la demande :
**17.09.86 Bulletin 86/38**

(45) Mention de la délivrance du brevet :
**08.05.91 Bulletin 91/19**

(84) Etats contractants désignés :
**AT BE CH DE FR GB IT LI LU NL SE**

(56) Documents cités :
**FR-A- 2 451 347**
**GB-A- 2 071 081**

(56) Documents cités :
**CHEMICAL ABSTRACTS, vol. 97, no. 10, septembre 1982, pages 317-318, no. 77341x, Columbus, Ohio, US; D. TENTULESCU: "Glass fibers resistant to alkaline media for reinforcing concrete and cement mortar. Part I", & MATER. CONSTR. (BUCHAREST) 1982, 12(1), 42-6**
**Dossier p. 46, 55, 56.**

(73) Titulaire : **VETROTEX SAINT-GOBAIN**
**767 quai des Allobroges**
**F-73000 Chambéry (FR)**

(72) Inventeur : **Chopinet, Marie-Hélène**
**90, rue Duhesme**
**F-75018 Paris (FR)**

(74) Mandataire : **Breton, Jean-Claude et al**
**SAINT-GOBAIN RECHERCHE 39, quai Lucien Lefranc**
**F-93300 Aubervilliers Cedex (FR)**

## Description

La présente invention concerne des fibres de verre susceptibles de résister à l'attaque de milieux fortement basiques et aptes à servir d'éléments de renforcement aux produits à base de ciment.

Les fibres de verre, étirées mécaniquement à partir du verre fondu s'écoulant par les orifices d'une filière chauffée par effet Joule, possèdent une résistance à la traction et un module d'élasticité particulièrement élevés, comparativement à d'autres fibres organiques ou minérales. De ce fait, elles constituent un matériau de choix pour améliorer les propriétés mécaniques de nombreux produits composites.

Lorsqu'il s'agit de renforcer des produits à base de ciment, les fibres de verre doivent présenter, outre de bonnes propriétés mécaniques, une excellente résistance chimique en milieu basique.

Si les fibres de verre sont toujours corrodées en présence de la solution saturée de $Ca(OH)_2$ imprégnant la matrice de ciment, il est possible de minimiser leur attaque grâce à des compositions de verre appropriées.

Ainsi, la résistance des fibres de verre est fortement accrue en utilisant des compositions de verre comprenant une teneur élevée en zircone ($ZrO_2$). L'incorporation de zircone dans les compositions de verre est notamment préconisée par le brevet britannique n° 1 243 972 et le brevet américain n° 3 861 926. Si l'introduction de zircone dans les compositions de verre augmente sensiblement leur résistance à l'égard des milieux basiques, elle présente toutefois certains inconvénients.

Ainsi la présence de cet oxyde dans les verres augmente leur viscosité et élève considérablement la température supérieure de dévitrification (TSD). Les verres devenant plus visqueux, la température de fibrage ($T_F$) augmente mais parfois moins rapidement que la TSD. Lorsque la teneur en zircone s'accroit, l'écart entre ces températures devient de plus en plus faible et la TSD peut même devenir supérieure à $T_F$. Les risques de dévitrification sont alors trop grands pour envisager de produire des fibres de verre sur une installation industrielle.

Ces risques sont souvent atténués en ajoutant à la composition de base un ou plusieurs oxydes supplémentaires, dont le rôle essentiel est d'abaisser la TSD, voire même de changer la nature de l'espèce cristalline qui apparait à la température la plus élevée.

L'expérience a montré que la fabrication de fibres de verre continues à l'échelle industrielle n'est envisageable que si certaines conditions sont remplies par les verres dont elles sont issues, en particulier si l'écart entre la température correspondant sensiblement à la viscosité $\eta$, telle que log $\eta$ = 2,5 et la TSD est au moins égal à 80°C et de préférence au moins égal à 100°C.

Par ailleurs, il est souhaitable que la température $T_F$, qui correspond sensiblement à la viscosité $\eta$ telle que log $\eta$ = 2,8 soit inférieure à 1480°C, et de préférence inférieure ou égale à 1400°C, afin d'éviter une usure trop rapide des filières en alliage de platine, généralement utilisées pour l'obtention de fibres continues.

L'invention a pour objet des fibres de verre susceptibles d'être obtenues par étirage mécanique d'un verre qui satisfait les conditions précédemment exprimées et dont le coût est le plus réduit possible.

L'invention a également pour objet des fibres de verre dont la composition comprend un faible nombre de constituants et tous d'un prix réduit, à l'exception de la zircone qui est introduite toutefois en quantité modérée, lesdites fibres présentant néanmoins une excellente résistance aux milieux basiques.

Ces buts sont atteints grâce à des verres dont la composition est constituée des oxydes suivants dans les proportions pondérales indiquées ci-après :

| | |
|---|---|
| $SiO_2$ | 56 à 68% |
| $ZrO_2$ | 14 à 17% |
| $Na_2O$ | 12 à 20% |
| $K_2O$ | 0 à 8% |
| $Al_2O_3$ | 1 à 9% |

la somme $Na_2O$ + $K_2O$ étant comprise entre 14 et 22% et la somme $SiO_2$ + $Al_2O_3$ demeurant inférieure à 70%.

Le respect de cette dernière condition permet d'éviter une augmentation excessive de la viscosité du verre. Si $SiO_2$ joue son rôle traditionnel de formation du réseau vitreux ainsi que $Al_2O_3$, ce dernier doit être introduit en quantité modérée car, dans le contexte des verres de l'invention, cet oxyde peut augmenter les risques de dévitrification. Cet oxyde est avantageusement introduit par l'intermédiaire d'une matière première vitrifiable complexe qui apporte d'autres oxydes tels que $SiO_2$, $Na_2O$, $K_2O$. L'utilisation d'une telle matière première, qui forme par elle-même une combinaison d'oxydes, présente l'avantage de faciliter la fusion du mélange vitrifiable, ce qui est très appréciable dans le cas de verres visqueux par nature. Elle est de surcroit peu onéreuse.

Les verres appartenant au domaine défini précédemment présentent, en général, un écart supérieur à 100°C entre la température correspondant à log $\eta$ = 2,5 et la TSD, lorsque la teneur en silice reste comprise entre 58 et 66% et celle de l'alumine entre 1 et 7,5%. La somme $SiO_2$ + $Al_2O_3$ sera de préférence inférieure ou égale à 68%.

L'amélioration de la résistance chimique d'un verre noyé dans une matrice à base de ciment est généralement due à l'action conjointe de $ZrO_2$ et d'un autre ou de plusieurs autres oxydes. La combinaison d'oxydes la plus courante, et certainement la plus économique, est celle réunissant $ZrO_2$ et un ou plusieurs oxydes alcalino-terreux ; malheureusement ces derniers oxydes augmentent le plus souvent les risques de dévitrification.

Les verres selon l'invention présentent une excellente résistance à l'égard des milieux basiques, malgré le fait qu'ils ne contiennent qu'un seul oxyde actif à cet égard, la zircone, et que cet oxyde est introduit en quantité modérée. Ceci est d'autant plus avantageux, que le maintien de la zircone dans les limites précitées évite d'augmenter excessivement la viscosité des verres et les risques de dévitrification.

Cet avantage permet d'utiliser uniquement les oxydes alcalins $Na_2O$ et $K_2O$ pour ajuster la viscosité du verre de manière à ce que la température de fibrage $T_F$ demeure inférieure ou égale à 1480°C, tout en conservant un écart suffisant avec la TSD.

Si $Na_2O$ permet à lui seul d'atteindre les objectifs fixés, il est cependant intéressant d'introduire dans les verres de l'invention une assez faible quantité de $K_2O$, surtout lorsque la somme des oxydes alcalins excède 19%. L'introduction de $K_2O$ dans la composition présente certains avantages, notamment celui d'utiliser des matières premières vitrifiables complexes contenant en particulier $Na_2O$ et $K_2O$.

Les verres de l'invention présentent d'excellentes caractéristiques notamment lorsque le pourcentage de $Na_2O$ est maintenu entre 13 et 19% et lorsque celui de $K_2O$ n'excède pas 6%. Il est en particulier souhaitable que la somme $Na_2O + K_2O$ reste comprise entre 15 et 20%.

Les compositions de verres les plus avantageuses sont généralement comprises dans le domaine ainsi délimité :

| | |
|---|---|
| $SiO_2$ | 58 à 66% |
| $ZrO_2$ | 15 à 16% |
| $Na_2O$ | 13 à 19% |
| $K_2O$ | 1 à 6% |
| $Al_2O_3$ | 1 à 7% |

Les caractéristiques des compositions de verres de l'invention seront mieux appréciées au travers des exemples figurant dans le tableau en annexe.

Les fibres de verre selon l'invention peuvent être avantageusement utilisées pour renforcer des produits à base de ciment, ainsi que le démontrent les résultats expérimentaux exposés ci-après.

L'aptitude au renforcement du ciment de fibres de verre répondant à une composition déterminée peut être évaluée en mesurant l'évolution de la résistance à la traction desdites fibres, après un séjour plus ou moins long dans une suspension de ciment Portland dans de l'eau.

Le rapport des quantités d'eau et de ciment est tel que le pH de la solution est égal à 12,6.

Les fibres destinées à être testées sont immergées dans cette suspension portée en permanence à la température de 80°C. Les temps de vieillissement s'échelonnent entre 1 et 17 jours.

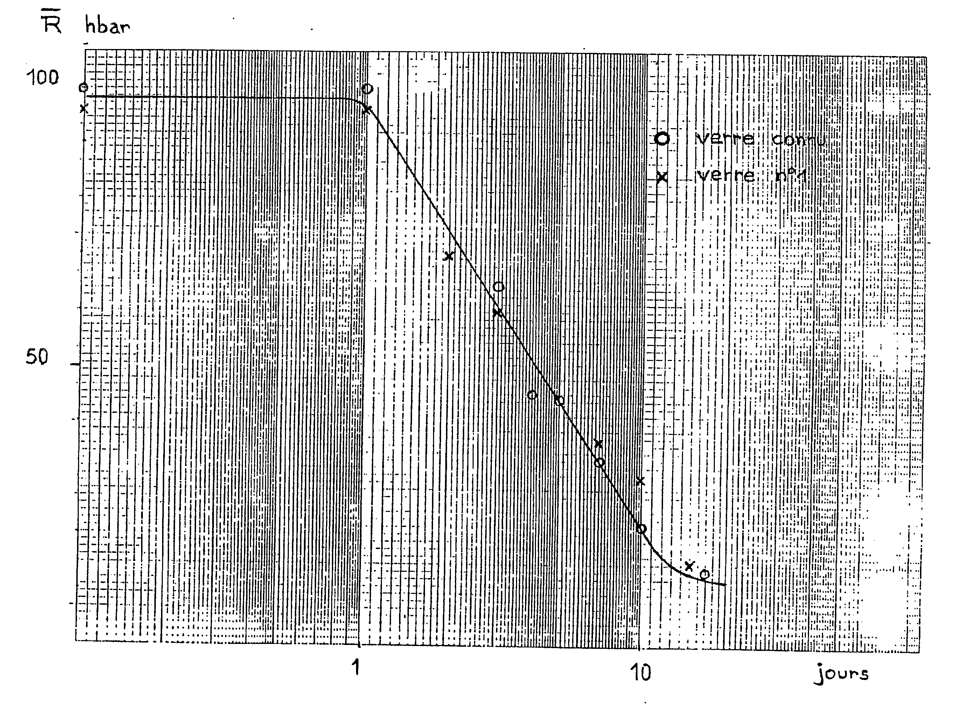

La figure montre l'évolution de la résistance à la traction de fibres dont la composition correspond à celle de la colonne n° 1 du tableau. A titre de comparaison, la figure représente également l'évolution de la résistance à la traction de fibres d'un verre connu, obtenues dans les mêmes conditions que celles du verre n° 1 et soumises aux mêmes vieillissements. Le verre connu, dont l'aptitude au renforcement du ciment a été démontrée, est commercialisé sous la marque "Cemfil" et appartient aux compositions décrites dans le brevet français n° 2 053 211.

Le vieillissement des deux verres est pratiquement identique et les évolutions de leurs résistances respectives peuvent être représentées par une seule courbe. Dans la mesure où la méthode utilisée est révélatrice du comportement du verre dans le ciment, l'aptitude au renforcement du ciment de la fibre correspondant à la composition n° 1 est tout à fait comparable à celle de la fibre "Cemfil".

Les produits à base de ciment peuvent être renforcés uniquement par des fibres de verre selon l'invention ou en les associant à d'autres fibres organiques ou minérales, telles que des fibres cellulosiques ou des fibres d'amiante.

Les fibres de verre selon l'invention peuvent être incorporées dans la matrice de ciment sous forme de fils continus ou des fibres coupées, comme par exemple des mèches, des rubans, des mats, des tissus, etc...

Le terme de ciment désigne en l'occurence les ciments hydrauliques ordinaires comme le ciment Portland. Le terme "produit à base de ciment" désigne tous les produits formés d'un mélange de ciment et d'aggrégats ou autres matières tels que sables, mica, silice ultrafine, cendres, etc...

3

## T A B L E A U

|  | n° 1 | n° 2 | n° 3 | n° 4 | n° 5 | n° 6 | n° 7 | n° 8 |
|---|---|---|---|---|---|---|---|---|
| $SiO_2$ | 58,5 % | 61,0 % | 61,8 % | 61,8 % | 65,0 % | 63,0 % | 67,0 % | 59,0 % |
| $ZrO_2$ | 15,0 % | 15,0 % | 14,6 % | 14,6 % | 14,0 % | 17,0 % | 16,0 % | 16,0 % |
| $Na_2O$ | 16,5 % | 16,9 % | 16,6 % | 13,3 % | 12,0 % | 19,0 % | 14,0 % | 16,0 % |
| $K_2O$ | 2,8 % | 2,1 % | – | 3,1 % | 8,0 % | – | 1,0 % | 6,0 % |
| $Al_2O_3$ | 7,2 % | 5,0 % | 7,3 % | 7,2 % | 1,0 % | 1,0 % | 2,0 % | 3,0 % |
| t°(°C) pour log η = 3 | 1343 | 1324 | 1399 | 1421 | 1435 | 1327 | 1411 | 1311 |
| = 2,8 | 1378 | 1360 | 1438 | 1460 | 1475 | 1360 | 1450 | 1345 |
| = 2,5 | 1434 | 1421 | 1504 | 1522 | 1521 | 1417 | 1512 | 1403 |
| TSD(°C) | 1330 | – | 1260 | 1400 | – | 1250 | – | 1340 |
| Δ (°C) | 104°C | ≫100°C | 244°C | 122°C | ≫100°C | 157°C | ≫100°C | 63°C |

TSD = température supérieure de dévitrification
Δ = température (log η = 2,5) – TSD

**Revendications**

1. Fibres de verre continues obtenues par étirage mécanique de filets de verre s'écoulant des orifices d'une filière chauffée par effet Joule, caractérisées par le fait qu'elles sont constituées par les constituants suivants, selon les proportions pondérales ci-après :

| | |
|---|---|
| SiO₂ | 56 à 68% |
| ZrO₂ | 14 à 17% |
| Na₂O | 12 à 20% |
| K₂O | 0 à 8% |
| Al₂O₃ | 1 à 9% |

La somme de Na₂O + K₂O restant comprise entre 14 et 22% et la somme SiO₂ + Al₂O₃ demeurant inférieure à 70%.

2. Fibres de verre selon la revendication 1, caractérisées en ce que le pourcentage de SiO₂ est compris entre 58 et 66% et celui de Al₂O₃ entre 1 et 7,5%.

3. Fibres de verre selon la revendication 2, caractérisées en ce que la somme SiO₂ + Al₂O₃ demeure inférieure ou égale à 68%.

4. Fibres de verre selon l'une des revendications précédentes, caractérisées en ce que le pourcentage de Na₂O est maintenu entre 13 et 19% et celui de K₂O inférieur ou égal à 6%.

5. Fibres de verre selon la revendication 4, caractérisées en ce que la somme Na₂O + K₂O reste comprise entre 15 et 20%.

6. Fibres de verre selon l'une des revendications précédentes, caractérisées par le fait qu'elles renferment les constituants suivants selon les proportions ci-après :

| | |
|---|---|
| SiO₂ | 58 à 66% |
| ZrO₂ | 15 à 16% |
| Na₂O | 13 à 19% |
| K₂O | 1 à 6% |
| Al₂O₃ | 1 à 7% |

7. Produit à base de ciment renforcé par des fibres, caractérisé par le fait qu'au moins une partie des fibres de renforcement sont des fibres de verre selon l'une des revendications précédentes.

**Claims**

1. Continuous glass fibres obtained by mechanical drawing from glass threads flowing from the apertures ina die heated by Joule's effect, characterized in that they include the following constituents according to the following proportions by weight :

| | |
|---|---|
| SiO₂ | 56 to 68% |
| ZrO₂ | 14 to 17% |
| Na₂O | 12 to 20% |
| K₂O | 0 to 8% |
| Al₂O₃ | 1 to 9% |

the total of Na₂O + K₂O remaining between 14 and 22% and the total of SiO₂ + Al₂O₃ remaining less than 70%.

2. Glass fibres according to claim 1, characterized in that the percentage of SiO₂ is between 58 and 66% while that of Al₂O₃ is between 1 and 7.5%.

3. Glass fibres according to claim 2, charactrized in that the total of SiO₂ + Al₂O₃ remains less than or equal to 68%.

4. Glass fibres according to one of the preceding claims, characterized in that the percentage of Na₂O is maintained between 13 and 19% and that of K₂O is less than or equal to 6%.

5. Glass fibres according to claim 4, characterized in that the total of Na₂O + K₂O remains between 15 and 20%.

6. Glass fibres according to one of the preceding claims, characterized in that they include the following constituents in the following proportions :

| | |
|---|---|
| $SiO_2$ | 58 to 66% |
| $ZrO_2$ | 15 to 16% |
| $Na_2O$ | 13 to 19% |
| $K_2O$ | 1 to 6% |
| $Al_2O_3$ | 1 to 7% |

7. Cement-based product reinforced with fibres, characterized in that at least a part of the reinforcing fibres are glass fibres according to one of the preceding claims.

## Ansprüche

1. Kontinuierliche Glasfasern, die durch mechanisches Ziehen von Glasfäden hergestellt sind, die aus den Öffnungen einer durch Widerstandsheizung erwärmten Düse austreten, entstehen, **dadurch gekennzeichnet,** daß diese Glasfasern aus den folgenden Bestandteilen gemäß den nachfolgend aufgeführten Gewichtsverhältnissen gebildet sind :

| | |
|---|---|
| $SiO_2$ | 56 bis 68% |
| $ZrO_2$ | 14 bis 17% |
| $Na_2O$ | 12 bis 20% |
| $K_2O$ | 0 bis 8% |
| $Al_2O_3$ | 1 bis 9% |

wobei die Summe aus $Na_2O + K_2O$ zwischen 14 und 22% liegt und die Summe aus $SiO_2 + Al_2O_3$ unter 70% bleibt.

2. Glasfasern nach Anspruch 1, **dadurch gekennzeichnet,** daß der Prozentsatz von $SiO_2$ zwischen 58 und 66% liegt und derjenige von $Al_2O_3$ zwischen 1 und 7,5%.

3. Glasfasern nach Anspruch 2, **dadurch gekennzeichnet,** daß die Summe aus $SiO_2 + Al_2O_3$ weniger als oder gleich 68% beträgt.

4. Glasfasern nach einem der vorhergehenden Ansprüche, **dadurch gekennzeichnet,** daß der Prozentsatz von $Na_2O$ zwischen 13 und 19% liegt und derjenige von $K_2O$ weniger als oder gleich 6% beträgt.

5. Glasfasern nach Anspruch 4, **dadurch gekennzeichnet,** daß die Summe aus $Na_2O + K_2O$ zwischen 15 und 20% liegt.

6. Glasfasern gemäß einem der vorhergehenden Ansprüche, **dadurch gekennzeichnet,** daß diese die folgenden Bestandteile gemäß den nachfolgend aufgeführten Verhältnissen enthalten :

| | |
|---|---|
| $SiO_2$ | 58 bis 66% |
| $ZrO_2$ | 15 bis 16% |
| $Na_2O$ | 13 bis 19% |
| $K_2O$ | 1 bis 6% |
| $Al_2O_3$ | 1 bis 7% |

7. Mit Fasern verstärktes Produkt auf Zementbasis, **dadurch gekennzeichnet,** daß mindestens ein Teil der Verstärkungsfasern Glasfasern gemäß einem der vorhergehenden Ansprüche sind.

$\overline{R}$ hbar

100

50

○ verre connu
× verre n°1

1          10          jours

EP 0 194 910 B1